# EUROPEAN PATENT SPECIFICATION

(11) **EP 1 544 551 B1**
(45) Date of publication and mention of the grant of the patent: **25.08.2010**
(21) Application number: 04029605.5
(22) Date of filing: 14.12.2004
(51) Int. Cl.: F24D 12/02, F28D 9/00, F28F 3/04

(54) **Heat exchange device particularly for heating systems**
Wärmetauscher für Heizungsanlagen
Echangeur de chaleur pour systèmes de chauffage

(30) Priority: 19.12.2003 IT CE20030007; 17.11.2004 IT TV20040136
(43) Date of publication of application: 22.06.2005
(73) Proprietor: Famar Brevetti S.r.l., 81050 Pietravairano (Prov. of Caserta) (IT)
(72) Inventor: Acquaro, Mario, 81050 Pietravairano (Prov. of Caserta) (IT)
(74) Representative: Modiano, Micaela Nadia

(56) References cited:
- DE-A1- 19 927 607
- FR-A- 2 364 410
- GB-A- 272 152
- US-A- 2 877 000
- US-A- 4 462 542

## Description

The present invention relates to a heat exchange device particularly for heating systems. Such a device is known from document US-A-4462542.

For some years now, the market has been orientated toward innovative products aimed at energy saving, which use renewable energy sources.

The solid fuel constituted by wood and its derivatives is in the foreground in this respect.

Currently, in heating systems that use heat generators based on solid fuel (fireplace-boilers et cetera) that cannot be controlled electrically, the applicable statutory provisions require the use of an open expansion vessel in order to compensate for the variations in volume of the water (the heat transfer fluid used in devices of this kind) during heating, and it is therefore necessary to insert, at an appropriate height above the highest radiator, a tank known as expansion tank.

At the same time, since it is necessary to install the solid-fuel heat generator in a system that is also served by a gas-fired boiler, which normally operates with a closed expansion vessel and therefore at a different pressure, currently it is necessary to insert an exchanger between the two heat generators, so that the two generators that use the same system exchange energy instead of heat transfer fluid.

The main drawback of these known kinds of exchanger is that if deposits form on the internal heat exchange plates, they cannot be cleaned easily, reducing the efficiency of the exchange over time (at least for smaller-capacity models, required for the systems being considered).

Another drawback of known types is that they offer high resistance to the flow of water in the primary and secondary circuits, to which the gas-fired boiler is connected, unless an oversized and therefore expensive exchanger is used.

Another drawback is that these known kinds of exchanger require the insertion of other pipes (filling pipe, safety pipe, et cetera) to be carried to the attic or optionally adjacent to the flue, and also require the presence of an additional component, the open expansion vessel, which if it corrodes, as often occurs, might cause leakage of the water that is present inside it.

The aim of the present invention is to solve the above-mentioned problems, eliminating the drawbacks of the cited prior art, by providing a heat exchange device that allows to combine both components and therefore ensure, in a modest amount of space, the presence of an open expansion vessel and the connection between the two heat generators (solid-fuel boiler and gas-fired generator).

Within this aim, an object of the invention is to provide a heat exchange device that allows to solve various problems that normally occur in open-circuit systems, such as the depriming of the circulating pump due to the presence of air in the circuit, difficulty in venting the air from the circuit owing to the low pressure at which it operates, and corrosion of the exposed parts, which cause degradation of the efficiency of the circuits and of the radiating bodies over time.

Another object is to provide a heat exchange device which, when installed above or laterally with respect to the solid-fuel heat generator and in any case always above the maximum level of the water contained in said generator, also allows expansion of the heating water, eliminating the need to install, on the ceiling of the dwelling in which the system is installed, the open expansion vessel with the corresponding discharge pipe, the safety pipe, and the supply pipe from the water mains in order to supply the float-controlled cock that controls the level of the water inside said expansion vessel.

Another object is to provide a device that is structurally simple and has low manufacturing costs.

This aim and these and other objects that will become better apparent hereinafter are achieved by a heat exchange device, as defined in the appended claims.

Further characteristics and advantages of the present invention will become better apparent from the following detailed description of a particular but not exclusive embodiment thereof, illustrated by way of example in the accompanying drawings, wherein:

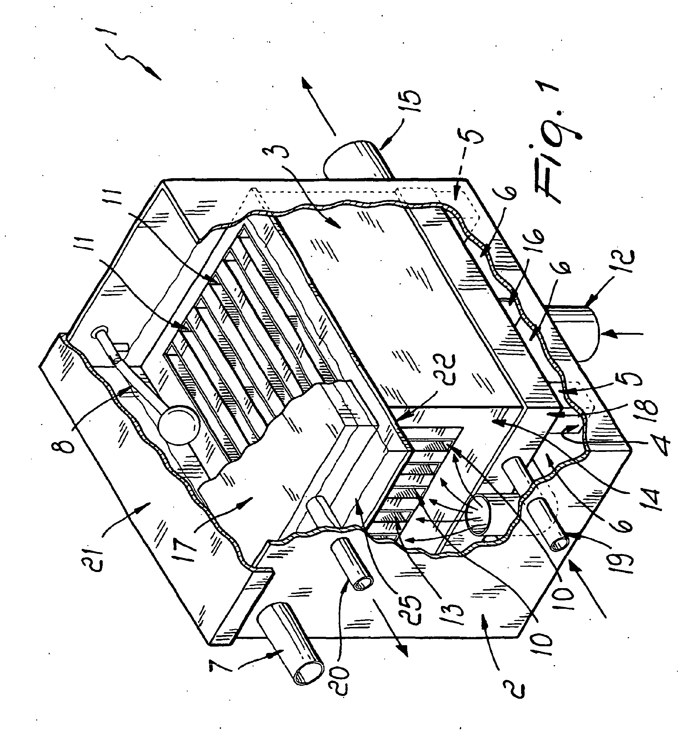

Figure 1 is a perspective cutout view of the device according to the invention;

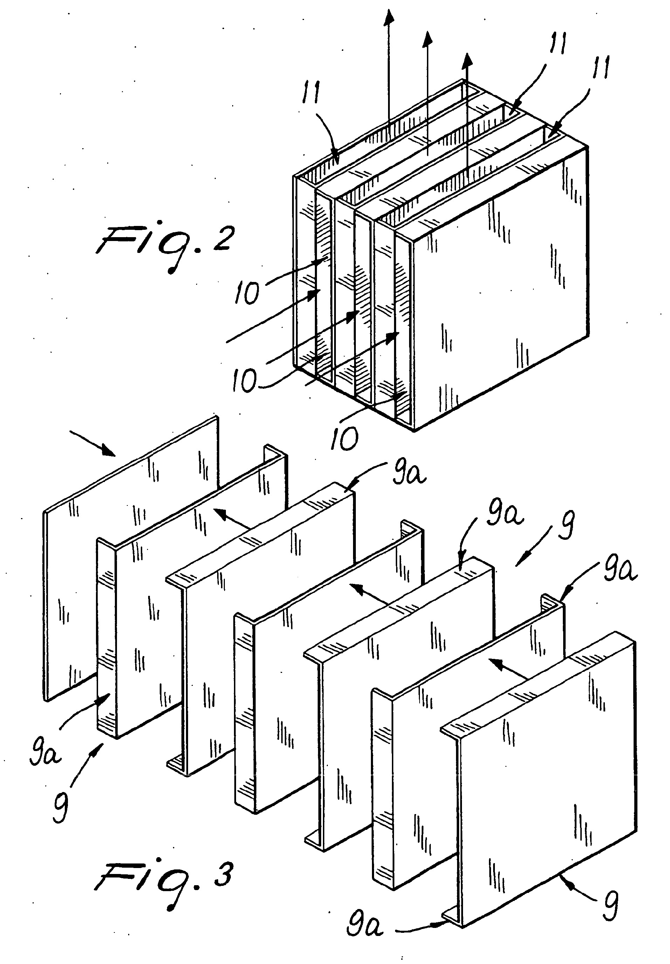

Figures 2 and 3 are respectively an exploded perspective view and a perspective view of a detail of the device of the invention;
Figure 4 is a perspective cutout view of a second embodiment of the device according to the invention;

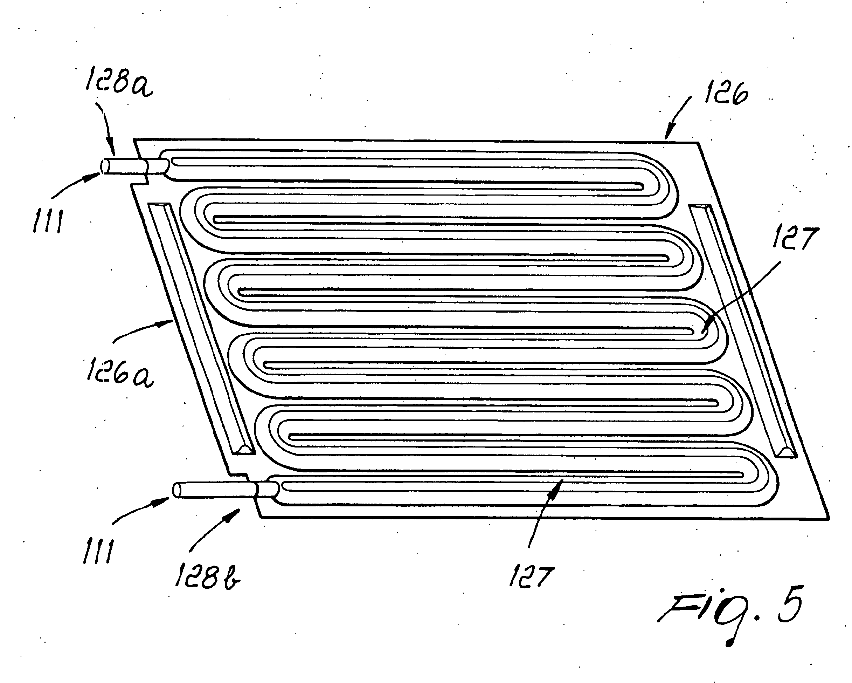

Figure 5 is a perspective view of a detail of the second embodiment of the device of the invention.

In the embodiments that follow, individual characteristics, given in relation to specific examples, may actually be interchanged with other different characteristics that exist in other embodiments.

With reference to the figures, the reference numeral 1 designates a heat exchange device, which is substantially constituted by an external box 2, which is shaped like a parallelepiped, is made of metal and acts as an open expansion vessel, its volume being sized in order to absorb even the maximum thermal expansions of the heat transfer fluid.

A heat exchanger 3, also shaped like a parallelepiped, is arranged inside the external box 2 and rests on a bottom 4 of the external box 2 by way of a plurality of feet 5 of appropriate height, so as to form a chamber 6 below said heat exchanger; according to a preferred embodiment, there are four feet 5.

The upper part of the external box 2 is closed hermetically by a lid 21, and any steam generated if the boiler reaches the boiling point is discharged into the drains by an appropriate rapid discharge pipe 7, which is connected to the external box 2.

Since the entire assembly is located just above the highest point of the solid-fuel heat generator, when the system is cold the level of the water 25, which is the heat transfer fluid, in the external box 2 is a few centimeters higher than the upper part of the exchanger 3.

When the system is at its maximum temperature, the level of the water must not exceed the level of the lower edge of the rapid discharge pipe 7 in order to avoid an excessive number of top-ups of cold water by means of a float-controlled cock 8, which would entail swift corrosion of the heat generator and deposits on said exchanger.

The heat exchanger 3 is composed of a plurality of approximately C-shaped first plates 9, each provided with two wings 9a.

The first plates 9 are arranged vertically and parallel to each other, so that the wings 9a are arranged alternately horizontally and vertically, and are preferably mutually spaced by approximately seven or eight millimeters in order to form first mutually parallel channels 10, the arrangement of which allows the downward flow of the water heated by the solid-fuel heat generator, the channels constituting the primary circuit and being alternated with second channels 11, inside which the water of the heating system that flows through the secondary circuit and is heated by conduction by the flow of water of the primary circuit flows upward, so that an optimum heat exchange in countercurrent occurs.

The hot water of the primary circuit enters the external box 2 from a first pipe 12, which is arranged on the bottom of the external box, by being propelled by a circulating pump, not shown in the figures, and rises so as to enter the first channels 10 formed by the first plates 9, which are approximately C-shaped, by means of a first opening 13 provided in a second front plate 14, which is arranged at right angles with respect to the first plates 9.

The heat exchanger 3 is closed at the rear by a third rear plate, which is parallel to the second plate 14 and is arranged on the opposite side of the heat exchanger 3 with respect to said second plate; at least one second opening is formed in said third rear plate proximate to its lower edge.

The water that exits from the exchanger through said second opening is then conveyed into a second pipe 15, which is connected in the lower part of the external box 2 and returns into the boiler by being propelled by an external circulating pump.

The water that exits from the heat exchanger may further rise in an interspace provided between the rear wall of the heat exchanger 3 and the rear wall of the art of the external box 2, its pressure defining the level of the water 25 that is present above the heat exchanger 3.

Since hot water tends to rise, it cools as it flows downward and is then collected by the second output pipe 15.

Inside the external box 2, the hot water inlet region is separated from the output region of the second pipe 15 by means of a first partition 16, which is arranged vertically, so that a short circuit of the primary water without passing through the first heat exchange plates 9 does not occur.

For this reason, while there is a chosen interspace between the heat exchanger 3 and the inlet region and the outlet region of the primary hot water, there is no interspace between the two sides of the heat exchanger 3 and the external box 2, such sides being adjacent to the lateral walls of the external box.

A second approximately horizontal partition 22 is provided inside the external box 2 and is arranged in front of the heat exchanger 3 at or above the upper edge of the second front plate 14, so as to prevent mixing of the water of the primary circuit, which enters the exchanger, with the water in output from it.

A first manifold 17, welded in an upper region with respect to the heat exchanger 3, and a second manifold 18, welded in a lower region with respect to the heat exchanger 3, are provided inside the external box 2 and act respectively as an output manifold and as an input manifold for the water of the secondary circuit.

Accordingly, the water of the secondary circuit, also propelled by an appropriate circulating pump by means of a third pipe 19, enters the second manifold 18 through the external box 2 and here, by being colder, is distributed uniformly within all of the second manifold and then rises vertically, becoming gradually warmer along the increasingly warm walls of the second vertical channels 11 and collecting within the first manifold 17, from which it exits by means of a fourth pipe 20 in order to reach the heating system, being heated by conduction by the primary circuit to which the solid-fuel heat generator is connected by means of appropriate piping.

Since the flow-rate of the water, in view of the cross-sections involved, is very low, in the primary circuit the fluid flows downward, since the difference in specific gravity between hot water and less-hot water is utilized, allowing an intended stratification in the downward motion, in order to utilize to the maximum possible extent the heat exchanges between the two fluids of the primary and secondary circuits.

In order to prevent water vapor from flowing into the environment, especially when the system is very hot or worse still when the boiler is at the boiling point (if there is an malfunction in one of the two circulating pumps), the external box is closed hermetically by means of the lid 21, so that the steam that is produced or the excess water (if the float-controlled cock 8 fails) is discharged externally and into the drains by means of the rapid discharge pipe 7, which has an appropriate diameter

It has thus been found that the device of the invention has achieved the intended aim and objects, a heat exchange device having been provided which combines in a limited amount of space the heat-exchange and expansion-vessel functions, ensuring in a modest amount of space the presence of an open expansion vessel and the connection between two heat generators, such as a solid-fuel boiler and a gas-fired generator.

Another object achieved by the device of the invention is to allow to solve many problems that normally occur in open-circuit systems, such as the depriming of the circulating pump due to the presence of air in the circuit, difficulty in venting said circuit due to the low pressure at which it operates, and corrosion of exposed parts.

Another object achieved by the device of the invention is to allow, once it is installed above or laterally with respect to the solid-fuel heat generator and in any case always above the maximum level of the water contained in said generator, the expansion of the heating water, eliminating the need to install, on the ceiling of the dwelling in which the system is installed, the open expansion vessel with the corresponding discharge pipe, the safety pipe and the pipe for feeding from the water mains in order to supply the float-controlled cock that controls the level of the water in said expansion vessel.

The invention is of course susceptible of numerous modifications and variations, within the scope of the appended claims.

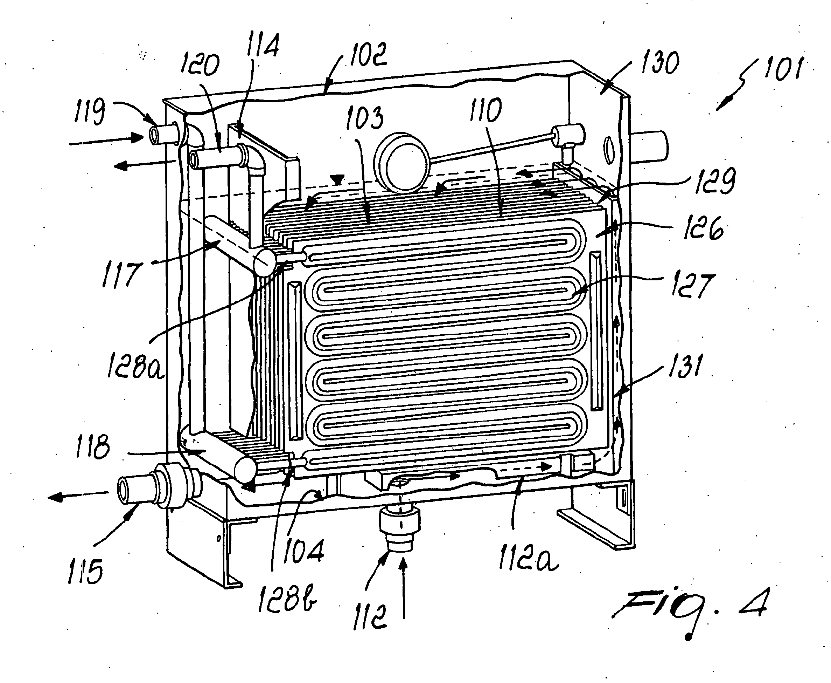

Thus, for example, Figure 4 illustrates a second embodiment of the heat exchange device 101, which comprises a heat exchanger 103, which is constituted by a plurality of fourth plates 126, which have an approximately flat rectangular shape.

A duct 127 is formed inside each fourth plate 126 and is arranged so as to form a coil that affects most of the surface of the fourth plate and is open at its opposite first and second ends 128a and 128b, which are arranged respectively proximate to the upper and lower ends of a same front edge 126a of each fourth plate 126.

Advantageously, each one of the fourth plates 126 may preferably be provided by means of two symmetrical plates, on each of which a coil-shaped channel is formed by pressing; the duct 127 is thus formed by the channels once the two symmetrical plates are arranged face-to-face and are joined in this position.

The fourth plates 126 are arranged so as to face each other vertically and are spaced appropriately from each other with a chosen gap, for example approximately seven or eight millimeters, so that a first vertical channel 110 is formed between each pair of fourth plates 126, while the second channels 111 are constituted by the ducts 127, which are parallel to each other.

A chosen interspace, preferably approximately equal to five or six millimeters and such as to ensure effective heat exchange even at the lateral ends of the heat exchanger 103, is formed between the two fourth plates 126 arranged at the lateral ends of the heat exchanger 103 and the lateral walls of the external box 102.

The first upper ends 128a of the ducts 127 are connected to the first manifold 117, from which the fourth pipe 120, connected to the outside of the box 102, branches out; likewise, the second lower ends 128b of the ducts 127 are connected to the second manifold 118, into which the third pipe 119 that arrives from the outside of the box 102 leads.

The heat exchanger 103 is closed at the rear by means of the third plate 129, which is approximately flat and approximately as high as the fourth plates 126; the third plate 129 is parallel to the rear wall 130 of the external box 102 at a chosen distance from it, so as to form between the wall and the exchanger 103 a chosen interspace that is open in an upper region and constitutes a vertical duct 131.

The first pipe 112 is connected directly to the vertical duct 131 at the lower end of the duct by means of a horizontal portion 112a, which is arranged on the bottom 104 of the external box 102.

The second front plate 114 is approximately C-shaped, is parallel to the third rear plate 129, and is higher than the third plate, so as to divert downward the water of the primary circuit that has risen through the vertical duct 131, so that it distributes uniformly through the first channels 110.

The operation of the second embodiment is similar to the operation of the previous embodiment, despite the absence of the first and second partitions, since the water that arrives from the primary circuit through the first pipe 112 is channeled directly inside the vertical duct 131, at the output of which it is free to fall through the first channels 110, so as to provide likewise a countercurrent heat exchange with the water of the secondary circuit that flows within the second channels 111 constituted by the ducts 127.

Once it has flowed out of the first channels 110, the water of the primary circuit can then be conveyed outside the box 102 through the second pipe 115, which is arranged advantageously proximate to the lower end of the heat exchanger 103 and in front of it, approximately at the second manifold 118.

The materials used and the dimensions that constitute the individual components of the invention may of course be more pertinent according to specific requirements. The various means for performing certain different functions need not certainly coexist only in the illustrated embodiment but can be present per se in many embodiments, including ones that are not illustrated. The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A heat exchange device (1;101), particularly for heating systems, comprising an external box (2;102), which is closed hermetically in an upper region by means of a lid (21), a first pipe (12;112), a second pipe (15;115) and a rapid discharge pipe (7), which are connected to the inside of said external box (2;102), said external box (2;102) containing a heat exchanger (3;103), to which a third pipe (19;119) and a fourth pipe (20;120) connected to the outside of said box (2;102) are connected, and inside said external box (2;102) there is a first manifold (17;117), which is welded in an upper region with respect to said heat exchanger (3;103), and there is a second manifold (18;118), which is welded in a lower region with respect to said heat exchanger (3;103), said first and second manifolds (17,18;117,118) being connected respectively to said fourth pipe (20;120) and said third pipe (19;119), so as to constitute respectively an output manifold and an input manifold for the water of a secondary circuit.

2. The device (1) according to claim 1, **characterized in that** said heat exchanger (3) comprises welded metallic plates (9,14) and is constituted by a plurality of approximately C-shaped first plates(9), each of which has two wings (9a) at two opposite edges, said first plates (9) being arranged vertically and parallel to each other, so that said wings (9a) are alternately horizontal and vertical, so as to constitute a plurality of first vertical channels (10) and second vertical channels (11), which are mutually alternated, for countercurrent heat exchange between a heating fluid and a heated fluid.

3. The device (1) according to claim 2, **characterized in that** said heat exchanger (3) comprises a second front plate (14), which is arranged at right angles to said first plates (9) and on which, proximate to its upper edge, there is at least one first opening (13), and a third rear plate, which is parallel to said second plate (14) and in which there is at least one second opening proximate to its lower edge.

4. The device (1) according to claim 3, **characterized in that** the water of a primary circuit flows downward and the water of the secondary circuit flows upward, in a parallel and countercurrent configuration, inside said first and second vertical channels (10,11).

5. The device (1) according to claim 4, **characterized in that** said heat exchanger (3) rests on the bottom (4) of said external box (2) by means of a plurality of feet (5) having a chosen height, so as to form a chamber (6) between said heat exchanger (3) and said bottom (4) of said external box (2).

6. The device (1) according to claim 5, **characterized in that** said heat exchanger (3) is shorter than said external box (2), a chosen interspace being formed between the front and rear regions of said exchanger (3) and said external box (2), and **in that** said heat exchanger (3) is approximately as wide as said external box (2), the sides of said heat exchanger (3) resting against the side walls of said external box (2).

7. The device (1) according to claim 6, **characterized in that** a first partition (16) is provided below said second manifold(18), is arranged vertically and transversely with respect to said external box (2), and has the same height as said chamber (6) provided between said heat exchanger (3) and said bottom (4) of said external box (2), so as to prevent mixing of the hot water of said primary circuit that arrives in said exchanger (3) with the water that flows out of it.

8. The device (1) according to claim 7, **characterized in that** in said external box (2) there is a second approximately horizontal partition (22), which is arranged in front of said exchanger (3) at or above the upper edge of said second front plate (14), so as to prevent mixing of the water of said primary circuit that enters said exchanger (3) with the water that exits from said heat exchanger (3).

9. The device (101) according to claim 2, **characterized in that** said heat exchanger (103) is constituted by a plurality of fourth plates (126), which have an approximately rectangular flat shape, a duct (127) being formed inside each one of said fourth plates (126), said duct (127) being arranged in a coiled configuration so as to affect most of the surface of said fourth plate (126) and being open at its opposite first and second ends, which are arranged respectively proximate to the upper and lower ends (128a,128b) of a same front edge of each one of said fourth plates (126).

10. The device (101) according to claim 9, **characterized in that** each one of said fourth plates (126) is provided by means of two symmetrical plates, on each of which a coiled channel is formed by pressing, each one of said ducts (127) being formed by channels (110,111) when said two symmetrical plates are arranged face-to-face and are joined in said position.

11. The device (101) according to claim 10, **characterized in that** said fourth plates (126) are arranged vertically side-by-side and are appropriately mutually spaced with a chosen gap, a first vertical channel (110) being formed between each pair of said fourth plates (126), second channels (111) being constituted by said ducts (127) arranged parallel to each other, the water of a primary circuit flowing downward and the water of a secondary circuit flowing upward in a parallel and countercurrent configuration inside said first and second channels (110,111).

12. The device (101) according to claim 11, **characterized in that** a chosen interspace is formed between said two fourth plates (126) arranged at the lateral ends of said heat exchanger (103) and the lateral walls of said external box (102), so as to ensure effective heat exchange also at the lateral ends of said heat exchanger (103).

13. The device (101) according to claim 12, **characterized in that** said heat exchanger (103) rests on the bottom (104) of said external box (102) by means of a plurality of feet having a chosen height.

14. The device (101) according to claim 13, **characterized in that** said first upper ends (128a) of said ducts (127) are connected to said first manifold (117), from which said fourth pipe (120) branches and is connected to the outside of the box (102), said second lower ends (128b) of said ducts (127) being connected to said second manifold (118), into which said third pipe (119) leads, said third pipe (119) arriving from the outside of said box (102).

15. The device (101) according to claim 14, **characterized in that** said heat exchanger (103) is closed at the rear by means of a third plate (129), which is approximately flat and approximately equal in height to said fourth plates (126), said third plate (129) being parallel to the rear wall (130) of said external box (102) at a chosen distance from it, so as to form between said external box (102) and said exchanger (103) a chosen interspace that is open upward and constitutes a vertical duct (131).

16. The device (101) according to claim 15, **characterized in that** said first pipe (112) is connected directly to said vertical duct (131), at said lower end thereof, by means of a horizontal portion of said first pipe (112) that is arranged on said bottom (104) of said external box (102).

17. The device (101) according to claim 16, **characterized in that** said exchanger (103) comprises a second front plate (114), which is approximately C-shaped and parallel to said third rear plate (129), said second plate (114) being higher than said third plate (129) so as to divert the water of said primary circuit, which has risen through said vertical duct (131), toward said first channels (110).

18. The device (1;101) according to one or more of the preceding claims, **characterized in that** it comprises a float-controlled cock (8), which is arranged inside said external box (2; 102); at an appropriate height, proximate to said lid (21) of said box (2; 102), in order to maintain a chosen minimum level of the water inside said external box (2;102) when the heating boiler is off.

19. The device (1;101) according to claim 18, **characterized in that** a chosen interspace is provided between said lid (21) of said external box (2;102) and said first manifold (17;117), said interspace being suitable to allow variations in the volume of the heating fluid according to the temperature of said fluid.

20. The device (1;101) according to claim 19, **characterized in that** said rapid discharge pipe (7) is connected to the inside of said external box (2;102) at a higher level than said first manifold (17;117), preferably proximate to said lid (21).

## Patentansprüche

1. Ein Wärmetauscher (1; 101), insbesondere für Heizsysteme, der einen äußeren Kasten (2; 102) umfasst, welcher in einem oberen Bereich durch einen Deckel (21) hermetisch verschlossen wird, ein erstes Rohr (12; 112), ein zweites Rohr (15; 115) und ein Schnellablassrohr (7), welche mit dem Inneren des äußeren Kastens (2; 102) verbunden sind, wobei der äußere Kasten (2; 102) einen Wärmetauscher (3; 103) enthält, mit dem ein drittes Rohr (19; 119) und ein viertes Rohr (20; 120), verbunden mit der Außenseite des Kastens (2; 102), verbunden sind; und wobei sich in dem äußeren Kasten (2; 102) ein erster Verteiler (17; 117) befindet, der in einem in Bezug zu dem Wärmetauscher (3; 103) oberen Bereich geschweißt ist, und wobei ein zweiter Verteiler (18; 110) vorhanden ist, der in einem in Bezug zu dem Wärmetauscher (3; 103) unteren Bereich geschweißt ist, wobei der erste und der zweite Verteiler (17, 18; 117, 118) mit dem vierten Rohr (20; 120) beziehungsweise dem dritten Rohr (19; 119) verbunden sind, so dass sie jeweils einen Ausgabeverteiler und einen Eingabeverteiler für das Wasser eines Sekundär-Kreislaufs bilden.

2. Die Vorrichtung (1) gemäß Anspruch 1, **dadurch gekennzeichnet, dass** der Wärmetauscher (3) geschweißte Metallplatten (9, 14) umfasst und aus einer Vielzahl ungefähr C-förmiger erster Platten (9) besteht, die jeweils zwei Flügel (9a) an zwei gegenüberliegenden Kanten haben, wobei die ersten Platten (9) vertikal und parallel zueinander angeordnet sind, so dass die Flügel (9a) abwechselnd horizontal und vertikal sind, so dass sie eine Vielzahl erster vertikaler Kanäle (10) und zweiter vertikaler Kanäle (11) bilden die zum Gegenströmungs-Wärmeaustausch zwischen einer Heizflüssigkeit und einer erhitzten Flüssigkeit miteinander abwechseln.

3. Die Vorrichtung (1) gemäß Anspruch 2, **dadurch gekennzeichnet, dass** der Wärmetauscher (3) eine zweite Vorderplatte (14) umfasst, die in rechten Winkeln zu den ersten Platten (9) angeordnet ist und an der sich, nahe ihrer Oberkante, mindestens eine erste Öffnung (13) befindet, und eine dritte Rückplatte umfasst, die parallel zu der zweiten Platte (14) ist und in der sich, nahe ihrer Unterkante, mindestens eine zweite Öffnung befindet.

4. Die Vorrichtung (1) gemäß Anspruch 3, **dadurch gekennzeichnet, dass** das Wasser eines Primär-Kreislaufs abwärts fließt und das Wasser des Sekundär-Kreislaufs aufwärts fließt, in paralleler und Gegenströmungs-Anordnung, in den ersten und zweiten vertikalen Kanälen (10, 11).

5. Die Vorrichtung (1) gemäß Anspruch 4, **dadurch gekennzeichnet, dass** der Wärmetauscher (3) mit Hilfe einer Vielzahl von Füßen (5) mit ausgewählter Höhe auf dem Boden (4) des äußeren Kastens (2) ruht, so dass eine Kammer (6) zwischen dem Wärmetauscher (3) und dem Boden (4) des äußeren Kastens (2) gebildet wird.

6. Die Vorrichtung (1) gemäß Anspruch 5, **dadurch gekennzeichnet, dass** der Wärmetauscher (3) kürzer ist als der äußere Kasten (2), wobei ein ausgewählter Zwischenraum zwischen dem vorderen und dem hinteren Bereich des Wärmetauschers (3) und dem äußeren Kasten (2) gebildet wird, und **dadurch**, dass der Wärmetauscher (3) ungefähr so breit ist wie der äußere Kasten (2), wobei die Seiten des Wärmetauschers (3) an den Seitenwänden des äußeren Kastens (2) lehnen.

7. Die Vorrichtung (1) gemäß Anspruch 6, **dadurch gekennzeichnet, dass** eine erste Trennwand (16) unterhalb des zweiten Verteilers (18) bereitgestellt ist, vertikal und transversal zu dem äußeren Kasten (2) angeordnet ist und dieselbe Höhe hat wie die Kammer (6), die zwischen dem Wärmetauscher (3) und dem Boden (4) des äußeren Kastens (2) bereitgestellt ist, um ein Mischen des heißen Wassers des Primär-Kreislaufs, das in den Wärmetauscher (3) gelangt, mit dem Wasser, das aus ihm herausfließt, zu verhindern.

8. Die Vorrichtung (1) gemäß Anspruch 7, **dadurch gekennzeichnet, dass** sich in dem äußeren Kasten (2) eine zweite ungefähr horizontale Trennwand (22) befindet, die vor dem Wärmetauscher (3) an oder über der oberen Kante der zweiten Vorderplatte (14) angeordnet ist, um ein Mischen des Wassers des Primär-Kreislaufs, das in den Wärmetauscher (3) gelangt, mit dem Wasser, das aus dem Wärmetauscher (3) austritt, zu verhindern.

9. Die Vorrichtung (101) gemäß Anspruch 2, **dadurch gekennzeichnet, dass** der Wärmetauscher (103) aus einer Vielzahl vierter Platten (126) besteht, die eine ungefähr rechteckige flache Form haben, wobei eine Leitung (127) in jeder der vierten Platten (126) geformt ist und die Leitung (127) in einer gewundenen Konfiguration angeordnet ist, so dass sie den größten Teil der Oberfläche der vierten Platte (126) betrifft, und an ihren gegenuberliegenden ersten und zweiten Enden offen ist, die nahe den oberen beziehungsweise unteren Enden (128a, 128b) einer selben Vorderkante jeder der vierten Platten (126) angeordnet sind.

10. Die Vorrichtung (101) gemäß Anspruch 9, **dadurch gekennzeichnet, dass** jede der vierten Platten (126) mit Hilfe zweier symmetrischer Platten bereitgestellt wird, auf denen jeweils ein gewundener Kanal durch Pressen geformt wird, wobei jede der Leitungen (127) von Kanälen (110, 111) geformt wird, wenn die zwei symmetrischen Platten sich gegenüberliegen und in der Position verbunden sind.

11. Die Vorrichtung (101) gemäß Anspruch 10, **dadurch gekennzeichnet, dass** die vierten Platten (126) vertikal nebeneinander angeordnet und mit einer ausgewählten Lücke angemessen voneinander beabstandet sind, wobei ein erster vertikaler Kanal (110) zwischen jedem Paar der vierten Platten (126) gebildet wird und zweite Kanäle (111) von den Leistungen (127) gebildet werden, die parallel zueinander angeordnet sind, wobei das Wasser eines Primär-Kreislaufs abwärts fließt und das Wasser eines Sekundär-Kreislaufs aufwärts fließt, in einer parallelen und Gegenströmungs-Anordnung in den ersten und zweiten Kanälen (110, 111).

12. Die Vorrichtung (101) gemäß Anspruch 11, **dadurch gekennzeichnet, dass** ein ausgewählter Zwischenraum zwischen den zwei vierten Platten (126) gebildet wird, die an den seitlichen Enden des Wärmetauschers (103) angeordnet sind, und den seitlichen Wänden des äußeren Kastens (102), um wirksamen Wärmeaustausch auch an den seitlichen Enden des Wärmetauschers (103) sicherzustellen.

13. Die Vorrichtung (101) gemäß Anspruch 12, **dadurch gekennzeichnet, dass** der wärmetauscher (103) mit Hilfe einer Vielzahl von Füßen mit einer ausgewählten Höhe auf dem Boden (104) des äußeren Kastens (102) ruht.

14. Die Vorrichtung (101) gemäß Anspruch 13, **dadurch gekennzeichnet, dass** die ersten oberen Enden (128a) der Leitungen (127) mit dem ersten Verteiler (117) verbunden sind, von dem das vierte Rohr (120) abzweigt und mit der Außenseite des Kastens (102) verbunden ist, wobei die zweiten unteren Enden (128b) der Leitungen (127) mit dem zweiten Verteiler (118) verbunden sind, in den das dritte Rohr (119) führt, wobei das dritte Rohr (119) von der Außenseite des Kastens (102) kommt.

15. Die Vorrichtung (101) gemäß Anspruch 14, **dadurch gekennzeichnet, dass** der Wärmetauscher (103) an der Rückseite durch eine dritte Platte (129) verschlossen ist, die ungefähr flach und ungefähr so hoch ist wie die vierten Platten (126), wobei die dritte Platte (129) parallel zur Rückwand (130) des äußeren Kastens (102) in einem ausgewählten Abstand davon ist, so dass sie zwischen dem äußeren Kasten (102) und dem wärmetauscher (103) einen ausgewählten Zwischenraum bildet, der nach oben offen ist und eine vertikale Leitung (131) bildet.

16. Die Vorrichtung (101) gemäß Anspruch 15, **dadurch gekennzeichnet, dass** das erste Rohr (112) direkt mit der vertikalen Leitung (131) an dem unteren Ende davon verbunden ist, und zwar durch einen horizontalen Abschnitt des ersten Rohrs (112), der an dem Boden (104) des äußeren Kastens (102) angeordnet ist.

17. Die Vorrichtung (101) gemäß Anspruch 16, **dadurch gekennzeichnet, dass** der Wärmetauscher (103) eine zweite Vorderplatte (114) umfasst, die ungefähr C-förmig und parallel zu der dritten Rückplatte (129) ist, wobei die zweite Platte (114) höher ist als die dritte Platte (129), um das Wasser des Primär-Kreislaufs, das durch die vertikale Leitung (131) aufgestiegen ist, zu den ersten Kanälen (110) hin umzuleiten.

18. Die Vorrichtung (1; 101) gemäß einem oder mehreren der obigen Ansprüche, **dadurch gekennzeichnet, dass** sie einen Schwimmer-regulierten Hahn (8) umfasst, der in einer angemessenen Höhe, nahe dem Deckel (21) des Kastens (2; 102), in dem äußeren Kasten (2; 102) angeordnet ist, um einen ausgewählten Minimalpegel des Wassers in dem äußeren Kasten (2; 102) aufrechtzuerhalten, wenn der Heizkessel ausgeschaltet ist.

19. Die Vorrichtung (1; 101) gemäß Anspruch 18, **dadurch gekennzeichnet, dass** ein ausgewählter Zwischenraum zwischen dem Deckel (21) des äußeren Kastens (2; 102) und dem ersten Verteiler (17; 117) bereitgestellt ist, wobei der Zwischenraum geeignet ist, um Schwankungen im Volumen der Heizflussigkeit entsprechend der Temperatur der Flüssigkeit zu ermöglichten.

20. Die Vorrichtung (1; 101) gemäß Anspruch 19, **dadurch gekennzeichnet, dass** das Schnellablassrohr (7) mit dem Inneren des äußeren Kastens (2; 102) auf einer höheren Ebene als der erste Verteiler (17; 117), vorzugsweise nahe dem Deckel (21), verbunden ist.

## Revendications

1. Dispositif d'échange de chaleur (1; 101), en particulier pour systèmes de chauffage, comprenant un boîtier externe (2 ; 102), qui est fermé hermétiquement dans une région supérieure au moyen d'un couvercle (21), un premier tuyau (12; 112), un deuxième tuyau (15 ; 115) et un tuyau de décharge rapide (7), qui sont raccordés à l'intérieur dudit boîtier externe (2; 102), ledit boîtier externe (2 ; 102) contenant un échangeur de chaleur (3 ; 103), auquel un troisième tuyau (19 ; 119) et un quatrième tuyau (20 ; 120) raccordés à l'extérieur dudit boîtier (2 ; 102) sont raccordés et dans lequel il y a, à l'intérieur dudit boîtier externe (2 ; 102), un premier collecteur (17 ; 117), qui est soudé dans une région supérieure par rapport audit échangeur de chaleur (3; 103) et un deuxième collecteur (18 ; 118), qui est soudé dans une région inférieure par rapport audit échangeur de chaleur (3 ; 103), lesdits premier et deuxième collecteurs (17, 18 ; 117, 118) étant raccordés, respectivement, audit quatrième tuyau (20 ; 120) et audit troisième tuyau (19; 119) de manière à constituer, respectivement, un collecteur de sortie et un collecteur d'entrée pour l'eau d'un circuit secondaire.

2. Dispositif (1) selon la revendication 1, **caractérisé en ce que** ledit échangeur de chaleur (3) comprend des plaques métalliques soudées (9, 14) et est constitué d'une pluralité de premières plaques (9) approximativement en forme de C, qui ont chacune deux ailes (9a) sur deux bords opposés, lesdites premières plaques (9) étant agencées verticalement et parallèlement l'une à l'autre, de sorte que lesdites ailes (9a) soient en alternance horizontales et verticales; de manière à constituer une pluralité de premiers canaux verticaux (10) et de deuxièmes canaux verticaux (11), qui sont mutuellement alternés, en vue d'un échange de chaleur à contra-courant entre un fluide de chauffage et un fluide chauffé,

3. Dispositif (1) selon la revendication 2, **caractérisé en ce que** ledit échangeur de chaleur (3) comprend une deuxième plaque avant (14), qui est aménagée à angles droits avec lesdites premières plaques (9) et sur laquelle, à proximité de son bord supérieur, il y a au moins une première ouverture (13) et une troisième plaque arrière, qui est parallèle à ladite deuxième plaque (14) et dans laquelle il y a au moins une deuxième ouverture à proximité de son bord inférieur.

4. Dispositif (1) selon la revendication 3, **caractérisé en ce que** l'eau d'un circuit primaire s'écoule vers le bas et l'eau du circuit secondaire s'écoule vers le haut, selon une configuration parallèle et à contre-courant, à l'intérieur desdits premiers et deuxième canaux verticaux (10, 11).

5. Dispositif (1) selon la revendication 4, **caractérisé en ce que** ledit échangeur de chaleur (3) repose sur le fond (4) dudit boîtier externe (2) au moyen d'une pluralité de pieds (5) ayant une hauteur choisie, de manière à former une chambre (6) entre ledit échangeur de chaleur (3) et ledit fond (4) dudit boîtier externe (2).

6. Dispositif (1) selon la revendication 5, **caractérisé en ce que** ledit échangeur de chaleur (3) est plus court que ledit boîtier externe (2), un espace intermédiaire choisi étant formé entre les régions avant et arrière dudit échangeur (3) et dudit boîtier externe (2), et **en ce que** ledit échangeur de chaleur (3) est approximativement aussi large que ledit boîtier externe (2), les côtés dudit échangeur de chaleur (3) reposant contre les parois latérales dudit boîtier externe (2).

7. Dispositif (1) selon la revendication 6, **caractérisé en ce qu'**une première séparation (16) est aménagée en dessous dudit deuxième collecteur (18), est aménagé verticalement et transversalement par rapport audit boîtier externe (2) et a la même hauteur que ladite chambre (6) aménagée entre ledit échangeur de chaleur (3) et ledit fond (4) dudit boîtier externe (2) de manière à empêcher le mélange de l'eau chaude dudit circuit primaire qui arrive dans ledit échangeur (3) avec l'eau qui s'en écoule.

8. Dispositif (1) selon la revendication 7, **caractérisé en ce que**, dans ledit boîtier externe (2), il y a une deuxième séparation approximativement horizontale (22), qui est aménagée à l'avant dudit échangeur (3) au niveau ou au-dessus du bord supérieur de ladite deuxième plaque avant (14), de manière à empêcher le mélange de l'eau dudit circuit primaire qui entre dans ledit échangeur (3) avec l'eau qui sort dudit échangeur de chaleur (3).

9. Dispositif (101) selon la revendication 2, **caractérisé en ce que** ledit échangeur de chaleur (103) est constitué d'une pluralité de quatrièmes plaques (126), qui ont une forme plate approximativement rectangulaire, un conduit (127) étant formé à l'intérieur de chacune desdites quatrièmes plaques (126), ledit conduit (127) étant aménagé en configuration hélicoïdale de manière à affecter la majeure partie de la surface de ladite quatrième plaque (126) et étant ouvert à ses première et deuxième extrémités opposées, qui sont aménagées, respectivement, à proximité des extrémités supérieure et inférieure (128a, 128b) d'un même bord avant de chacune desdites quatrièmes plaques (126).

10. Dispositif (101) selon la revendication 9, **caractérisé en ce que** chacune desdites quatrièmes plaques (126) est formée de deux plaques symétriques, sur chacune desquelles un canal hélicoïdal est formé par compression, chacun desdits conduits (127) étant formé par des canaux (110, 111) lorsque lesdites deux plaques symétriques sont aménagées face à face et sont réunies dans ladite position.

11. Dispositif (101) selon la revendication 10, **caractérisé en ce que** lesdites quatrièmes plaques (126) sont aménagées verticalement côte à côte et sont commodément espacées mutuellement d'un intervalle choisi, un premier canal vertical (110) étant formé entre chaque paire desdites quatrièmes plaques (126), des deuxièmes canaux (111) étant constitués par lesdits conduits (127) aménagés parallèlement l'un à l'autre, l'eau d'un circuit primaire s'écoulant vers le bas et l'eau d'un circuit secondaire s'écoulant vers le haut en configuration parallèle et à cantre-couxant, à l'intérieur desdits premiers et deuxième canaux verticaux (110, 111).

12. Dispositif (101) selon la revendication 11, **caractérisé en ce qu'**un espace intermédiaire est formé entre lesdites deux quatrièmes plaques (126) aménagées aux extrémités latérales dudit échangeur de chaleur (103) et les parois latérales dudit boîtier externe (102) de manière à assurer un échange de chaleur efficace également aux extrémités latérales dudit échangeur de chaleur (103).

13. Dispositif (101) selon la revendication 12, **caractérisé en ce que** ledit échangeur de chaleur (103) repose sur le fond (104) dudit boîtier externe (102) au moyen d'une pluralité de pieds ayant une hauteur choisie.

14. Dispositif (101) selon la revendication 13, **caractérisé en ce que** lesdites premières extrémités supérieures (128a) desdits conduits (127) sont raccordées audit premier collecteur (117), à partir duquel ledit quatrième tuyau (120) se ramifie et est raccordé à l'extérieur du boîtier (102), lesdites deuxième extrémités inférieures (128b) desdits conduits (127) étant raccordées audit deuxième collecteur (128), dans lequel ledit troisième tuyau (112) mène, ledit troisième tuyau (119) arrivant de l'extérieur dudit boîtier (102).

15. Dispositif (101) selon la revendication 14, **caractérisé en ce que** ledit échangeur de chaleur (103) est fermé à l'arrière au moyen d'une troisième plaque (129), qui est approximativement plate et approximativement de hauteur égale à celle desdites quatrièmes plaques (126), ladite troisième plaque (129) étant parallèle à la paroi arrière (130) dudit boîtier externe (102) à une distance choisie de celui-ci, de manière à former entre ledit boîtier externe (102) et ledit échangeur (103) un espace intermédiaire choisi qui est ouvert vers le haut et constitue un conduit vertical (131).

16. Dispositif (101) selon la revendication 15, **caractérisé en ce que** ledit premier tuyau (112) est raccordé directement audit conduit vertical (131), à sa dite extrémité inférieure, au moyen d'une partie horizontale dudit premier tuyau (112) qui est aménagée sur ledit fond (104) dudit boîtier externe (102).

17. Dispositif (101) selon la revendication 16, **caractérisé en ce que** ledit échangeur (103) comprend une deuxième plaque avant (114), qui est approximativement en forme de C et est parallèle à ladite troisième plaque arrière (129), ladite deuxième plaque (114) étant plus haute que ladite troisième plaque (129) de manière à dévier l'eau dudit circuit primaire, qui s'est élevée à travers ledit conduit vertical (131), vers lesdits premiers canaux (110).

18. Dispositif (1 ; 101) selon une ou plusieurs des revendications précédentes, **caractérisé en ce qu'**il comprend un robinet commandé par flotteur (8) qui est aménagé à l'intérieur dudit boîtier externe (2 ; 102) à une hauteur appropriée, à proximité dudit couvercle (21) dudit boîtier (2 ; 102) afin de maintenir un niveau minimal choisi de l'eau à l'intérieur dudit bottier externe (2 ; 102) lorsque la chaudière est arrêtée.

19. Dispositif (1 ; 101) selon la revendication 18, **caractérisé en ce qu'**un espace intermédiaire choisi est aménagé entre ledit couvercle (21) dudit boîtier externe (2 ; 102) et ledit premier collecteur (17 ; 117), ledit espace intermédiaire convenant pour permettre des variations du volume du fluide chauffant selon la température dudit fluide.

20. Dispositif (1 ; 101) selon la revendication 19, **caractérisé en ce que** ledit tuyau de décharge rapide (7) est raccordé à l'intérieur dudit boîtier externe (2 ; 102) à un niveau plus élevé que ledit premier collecteur (17; 117), de préférence à proximité dudit couvercle (21).
